Europäisches Patentamt

European Patent Office

Office européen des brevets

(19)

(11) Veröffentlichungsnummer: **0 141 007**
**B1**

(12)                    # EUROPÄISCHE PATENTSCHRIFT

(45) Veröffentlichungstag der Patentschrift:
08.10.86

(51) Int. Cl.⁴: **C 09 C 1/20**

(21) Anmeldenummer: **84101541.5**

(22) Anmeldetag: **15.02.84**

(54) **Verfahren zur Herstellung von Bleichromatpigmenten mit verbesserter Lichtechtheit und reinem Farbton.**

(30) Priorität: **23.08.83 DE 3330359**

(43) Veröffentlichungstag der Anmeldung:
**15.05.85 Patentblatt 85/20**

(45) Bekanntmachung des Hinweises auf die Patenterteilung:
**08.10.86 Patentblatt 86/41**

(84) Benannte Vertragsstaaten:
**BE DE FR GB IT NL**

(56) Entgegenhaltungen:
**DE - A - 1 952 537**

(73) Patentinhaber: **BASF Lacke + Farben
Aktiengesellschaft, Max-Winkelmann-Strasse 80,
D-4400 Münster (DE)**

(72) Erfinder: **Liedek, Egon, Dr. Dipl. Chem., Holunderweg 16,
D-7300 Esslingen (DE)**
Erfinder: **Knittel, Helmut, Dr. Dipl. Chem., Heilbronner
Strasse 66, D-7140 Ludwigsburg (DE)**
Erfinder: **Etzrodt, Günther, Dr. Dipl. Chem.,
Egmontweg 15, D-7000 Stuttgart 80 (DE)**

(74) Vertreter: **Kinzel, Klaus, Dr. et al, BASF
Aktiengesellschaft Patentabteilung,
D-6700 Ludwigshafen (DE)**

## Beschreibung

Unter Bleichromatpigmenten werden im vorliegenden Fall reine Bleichromate (Chromgelbe), aber auch Mischkristalle von Bleichromaten mit Bleisulfat, gegebenenfalls mit Bleimolybdat, verstanden. Da die genannten Pigmente wichtige Färbemittel in der Lack- und Kunststofftechnik darstellen, hat man schon vor Jahren Versuche unternommen, die ihnen eigene Lichtechtheit zu verbessern. So sind z.B. durch die alten deutschen Patentschriften 625 202, 640 874, 647 731 und 651 433 Verfahren bekannt geworden, durch die die Lichtechtheit verbessert werden kann, wenn unter Einhaltung gewisser in den Patentansprüchen angegebener Verfahrensbedingungen eine Erhitzung der Bleichromate auf höhere Temperaturen erfolgt. Die genannten Verfahren brachten zwar eine gewisse Verbesserung, genügten jedoch nicht den gestellten Ansprüchen, zumal auch häufig mit der Erhitzung eine unerwünschte Veränderung des Farbtons parallel einherlief. Zudem besassen die nach dem damaligen frühen Stand der Technik hergestellten Chromgelbe auch nicht die an sie gestellten Forderungen, wie z.B. Wetterechtheit und eine gewisse Chemikalienresistenz. Man hat daher in der Folgezeit versucht, eine Verbesserung der Lichtechtheit durch Zusatz von verschiedenen Hilfsstoffen während oder nach der Fällung des Bleichromatpigmentes zu erreichen. Insbesondere der Zusatz von Silicaten brachte im Hinblick auf die Lichtechtheit gewisse Verbesserungen ohne eine gravierende Veränderung des Farbtons, wie sie beim Erhitzen der Chromgelbpigmente auf höhere Temperaturen auftrat. Einen Durchbruch zur Verbesserung der Licht- und Wetterechtheit von Chromgelben stellt in diesem Zusammenhang das Verfahren des DBP-1 224 858 dar, das dadurch gekennzeichnet ist, dass eine salzfrei gewaschene Chromgelbaufschlämmung zuerst durch Zusatz von Alkali-Wasserglas auf einen pH-Wert von 9 bis 10 und danach durch Zusatz von Antimon- und Fluorionen auf einen pH-Wert von 4 bis 5 gestellt wird, wobei die Gesamtmenge der Zusatzstoffe etwa 4 bis 8%, bezogen auf das trockene Chromgelbpigment, beträgt. Wenn auch das letztgenannte Verfahren wegen einer synergistischen Wirkung der Einzelkomponenten Wasserglas-, Antimon- und Fluorionen eine wesentliche Verbesserung der Lichtechtheit bewirkt, so wird andererseits der Farbton durch den Zusatz von Antimonionen verschoben und die Herstellungsmöglichkeit von sehr klaren und im Falle des Chromgelbes von reinen grünstichigen Tönen vereitelt.

Die Anmelderin hatte sich daher die Aufgabe gestellt, gegenüber dem Stand der Technik Bleichromatpigmente mit besonders reinem Farbton und verbesserter Lichtechtheit unter Beibehaltung der sonstigen guten Eigenschaften von Bleichromatpigmenten nach dem Stand der Technik zu entwickeln.

Diese Aufgabe wurde gelöst durch ein Verfahren durch Erhitzung von Bleichromatpigmenten auf Temperaturen über 500° C, das dadurch gekennzeichnet ist, dass die Pigmente mit Antimon- und Silicationen stabilisiert sind, wobei der Antimon-Anteil, berechnet als $Sb_2O_3$, gegenüber dem Silicat-Anteil, berechnet als $SiO_2$ (jeweils bezogen auf das Pigment) im Unterschuss ist.

Dieses Ergebnis war insofern überraschend, als Bleichromatpigmente, die nur mit Silicat stabilisiert sind, bei einer Tempererung auf Temperaturen über 500° C zwar eine Verbesserung der Lichtechtheit aufweisen, aber gleichzeitig eine Verschlechterung des Farbtones zur Folge haben. Auch der Versuch, die verhältnismässig gut lichtechten Pigmente gemäss DBP 1 224 858, Beispiel 1 a und 2 a, die durch Zusatz von Silicat-, Antimon- und Fluorionen hergestellt wurden, durch Tempererung zu verbessern, führte zu schmutzigen Farbtönen. Zudem wird erfindungsgemäss die Verwendung von im Abwasser physiologisch bedenklichen Fluorionen vermieden. Die Chromgelbe, die nach den eingangs erwähnten Patentschriften 625 202, 640 874, 647 731 und 651 433 hergestellt wurden, sind ohnehin wegen des Fehlens der heute benötigten Eigenschaften nicht mehr einsetzbar. Weitere Verbesserungen können erzielt werden, wenn das Verhältnis von Antimon als $Sb_2O_3$ zu den Silicationen als $SiO_2$ in den Grenzen von 1:2,3 bis 1:3, insbesondere jedoch 1:2,6, stehen.

Die benötigte Zeit für die Erhitzung kann in gewissen Grenzen schwanken und hängt von der Erhitzungstemperatur ab. In den meisten Fällen ist bereits bei Temperaturen über 500° C eine Erhitzungsdauer von einer halben bis eine Stunde ausreichend. Längere Erhitzungszeiten sind möglich, jedoch bringen sie keine wesentlichen zusätzlichen Verbesserungen.

*Beispiel 1:*

In einem Rührbehälter von 30 l Inhalt werden 17 l Wasser eingefüllt. In einem 5-l-Becherglas werden in 2 l Wasser 387 g $Na_2Cr_2O_7 \cdot 2H_2O$, 45 kg NaCl und 154 ml Natronlauge (45%ig) gelöst, auf ein Volumen von 3,0 l mit Wasser aufgefüllt, und mit verdünnter Natronlauge wird ein pH-Wert von 7,2 eingestellt. Diese Lösung wird zu den 17 l Wasser in den Rührbehälter gegeben.

Unter intensivem Rühren wird die Chromat-Lösung mit 2,07 l einer Bleinitratlösung, welche 517,5 g Blei enthält, innerhalb von 45 Minuten umgesetzt. Der pH-Wert fällt bei der Umsetzung auf 6,3. Nach Erwärmung der Suspension auf 80° C in ca. 1,5 Stunden werden nochmals 220 ml einer Bleinitratlösung, welche 55 g Blei enthält, zur Pigmentsuspension zugesetzt. Der resultierende Bleiüberschuss wird mit 42 g $Na_2SO_4$ als Bleisulfat ausgefüllt. Der pH-Wert wird anschliessend mit verdünnter Schwefelsäure (5%ig) auf pH 4,0 eingestellt.

Anschliessend wird die Pigmentsuspension mit 18 g Natriumfluorid umgesetzt. Die Fluorid-Ionen werden dabei anstelle der $OH^-$-Ionen in den Pigmentkristall eingebaut.

Die Coating der Pigmentteilchen beginnt mit einer Silikatschicht, aufgebracht in Form von 44 ml Natriumwasserglas-Lösung (28,5% $SiO_2$, 8,8%

NaOH) und verdünnt mit 450 ml Wasser. Nach dem Zusatz innerhalb von 30 Minuten beträgt der pH-Wert 8,0.

Die weitere Pigment-Stabilisierung erfolgt mit 22 ml einer salzsauren $Na_3SbCl_6$-Lösung, wobei der pH-Wert der Suspension auf 5,8 sinkt. Dieser wird mit Natronlauge (5%ig) anschliessend auf 7,0 gestellt.

Mit einer weiteren Silikatschicht, welche durch Zugabe von 96 ml Natriumwasserglas-Lösung, verdünnt mit 1,0 l Wasser, innerhalb von 30 Minuten auf der Pigmentoberfläche erzeugt wird, wird die Stabilisierung fortgesetzt. Der pH-Wert der Pigmentsuspension steigt dabei auf 9,3.

Den Abschluss bildet eine Antimonoxidhydrat-Schicht, welche durch Zugabe von 98 ml einer $Na_3SbCl_6$-Lösung (Gehalt wie vorstehend) die Coating der Pigmentteilchen vervollständigt.

Der pH-Wert der Suspension wird mit Natronlauge auf 7,0 gestellt. Das Pigment wird anschliessend abfiltriert, auf der Nutsche gewaschen und getrocknet. Die Ausbeute beträgt 930 g.

Das resultierende Pigment hat einen trüben Farbton, wie es dem Stand der Technik der antimonstabilisierten Bleichromatpigmente entspricht. Das Verhältnis von $Sb_2O_3 : SiO_2$ beträgt 1 : 2,66.

Durch eine Wärmebehandlung des Pigmentes bei 540° C während einer Stunde erhält man ein Pigment mit einem leuchtend reinen Farbton. Gleichzeitig werden durch diese Wärmebehandlung Eigenschaften, wie Lichtechtheit und Temperaturbeständigkeit, noch weiter verbessert.

*Beispiel 2:*

In einen 30-l-Rührbehälter werden in 13 l Wasser 600 g Blei, eingesetzt als Bleinitrat, gelöst und auf 30° C erwärmt.

In einem zweiten Behälter von ca. 5 l Volumen werden in 2,0 l Wasser 326 g $Na_2Cr_2O_7 \cdot 2H_2O$, 78 g $Na_2SO_4$, 60 g NaCl und 135 ml Natronlauge (45%ig) gelöst und mit Wasser auf ein Gesamtvolumen von 3,0 l eingestellt.

Diese zweite Lösung wird innerhalb von 30 Minuten unter intensiver Rührung in den 30-l-Rührbehälter eingeleitet, wobei der pH-Wert der entstehenden Pigmentsuspension am Ende der Fällung 5,3 beträgt.

Innerhalb einer Stunde wird die Suspension auf 90° C erwärmt, der pH-Wert fällt dabei auf 4,8.

In einem Becherglas werden in 500 ml Wasser 48 g $Na_2SO_4$ gelöst und innerhalb von 10 Minuten zur Pigmentsuspension gegeben. Anschliessend wird der pH-Wert der Suspension mit verdünnter Schwefelsäure auf den pH-Wert von 4,5 gestellt.

In einem Becherglas werden mit 450 ml Wasser 44 ml Natriumwasserglas-Lösung (28,5 % $SiO_2$, 8,8 % NaOH) verdünnt. Die Stabilisierung der Pigmentteilchen mit der Natriumsilikatlösung erfolgt unter intensivem Rühren in ca. 30 Minuten. Der pH-Wert der Pigmentsuspension liegt nach der Zugabe bei 8,5. Die weitere Stabilisierung erfolgt mit 22 ml einer salzsauren $Na_3SbCl_6$-Lösung, welche 0,125 g $Sb_2O_3$ pro ml enthält. Nach der Zugabe zur Pigmentsuspension liegt der pH-Wert bei 5,8. Dieser wird anschliessend mit einer verdünnten Natronlauge (5%ig) auf 7,0 gestellt.

Die weitere Coating des Pigmentes erfolgt durch Zugabe von 96 ml Natriumwasserglas-Lösung, gelöst in 1,0 l Wasser. Nach einer Dosierzeit von 30 Minuten ist der pH-Wert der Pigmentsuspension auf 9,6 gestiegen.

Mit einer nochmaligen Coating mit 98 ml der schon beschriebenen $Na_3SbCl_6$-Lösung ist die Belegung der Pigmentteilchen abgeschlossen. Der pH-Wert der Pigmentsuspension wird mit verdünnter Natronlauge auf 6,0 gestellt. Das Pigment wird abfiltriert, mit Wasser auf der Nutsche gewaschen und anschliessend zwischen 100 und 150° C getrocknet.

Das resultierende Pigmente hat einen trüben Farbton, wie es dem Stand der Technik der antimonstabilisierten Bleichromatpigmente entspricht. Das Verhältnis von $Sb_2O_3 : SiO_2$ beträgt 1 : 2,66.

Durch eine Wärmebehandlung des Pigmentes bei 550° C während einer halben Stunde erhält man ein Pigment mit einem leuchtend reinen Farbton. Gleichzeitig werden durch diese Wärmebehandlung Eigenschaften, wie Lichtechtheit und Temperaturbeständigkeit, noch weiter verbessert. Die Ausbeute beträgt 960 g.

*Beispiel 3:*

In einem Rührbehälter von 40 l Inhalt werden 18 l Wasser eingefüllt und mit 713 g Blei, in Form einer Bleinitratlösung, versetzt. Bei 20° C hat diese verdünnte Bleinitratlösung einen pH-Wert von 4,5.

In einem 4-l-Becherglas werden in 2,4 l Wasser 462 g $Na_2Cr_2O_7 \cdot 2H_2O$, 36 g NaCl und 326 g Natronlauge (45%ig) gelöst. Der pH-Wert der Lösung beträgt 9,8. Diese Lösung wird innerhalb einer Stunde unter intensivem Rühren in die Bleinitratlösung eingeleitet. Dabei wird die entstehende Suspension am Ende der Fällung 8,3 bis 8,5, die Suspension wird noch 30 Minuten lang gerührt.

Mit einer verdünnten Salzsäure (1%ig) wird der pH-Wert anschliessend auf 7,8 eingestellt. In der Suspension sind keine überschüssigen Blei- und Chromationen mehr vorhanden.

In einem 2-l-Becherglas werden 180 g Natriumwasserglas-Lösung (28,5 % $SiO_2$, 8,8 % NaOH) mit 1,6 l Wasser verdünnt und unter Rühren in 45 Minuten in die Pigmentsuspension eingeleitet. Der pH-Wert beträgt am Ende 10.

In einem 250-ml-Becherglas werden 17,1 g Antrimontrioxid in Salzsäure (30%ig) gelöst. Anschliessend wird mit so viel Wasser verdünnt, bis gerade noch kein Antimonoxidchlorid ausfällt. Diese Lösung wird unter intensivem Rühren in die Pigmentsuspension eingeleitet. Wenn die Pigmentsuspension einen pH-Wert von 5,5 erreicht hat, wird dieser pH-Wert durch Einleitung von verdünnter Natronlauge (ca. 10%ig) gehalten. Der End-pH-Wert der Pigmentsuspension wird auf 6,0 mit obiger Natronlauge eingestellt. Nach einer weiteren Rührzeit von 30 Minuten wird das Pigment abfiltriert, auf der Nutsche gewaschen und anschliessend bei ca. 120° C getrocknet. Die Ausbeute beträgt 1100 g. Das Verhältnis von $Sb_2O_3$ : $SiO_3$ ist 1:3.

Das resultierende Pigment hat einen trüben Farbton, wie es dem Stand der Technik der antimonstabilisierten Bleichromatpigmente entspricht. Durch eine Wärmebehandlung des Pigmentes zwischen 530 und 590° C während 45 Minuten erhält man einen leuchtend reinen Farbton. Gleichzeitig werden durch diese Wärmebehandlung Eigenschaften, wie Lichtechtheit und Temperaturbeständigkeit, noch weiter verbessert.

*Beispiel 4:*

Ein Chromatpigment, wie es nach Beispiel 1 a des DBP 1 224 858 hergestellt wurde und bei dem der Antimonanteil gegenüber dem Silikatanteil (berechnet als $Sb_2O_3$ bzw. $SiO_2$) im Überschuss ist, wird während einer Stunde auf 550° C erhitzt. Im Gegensatz zu den resultierenden Pigmenten der Beispiele 1 bis 3 erhält man ein Produkt mit einem trüben, wenig attraktiven Farbton.

## Patentansprüche

1. Verfahren zur Herstellung von Bleichromatpigmenten mit verbesserter Lichtechtheit und reinem Farbton, durch Erhitzung auf Temperaturen über 500° C, dadurch gekennzeichnet, dass die Pigmente mit Antimon- und Silikationen stabilisiert sind, wobei der Antimon-Anteil, berechnet als $Sb_2O_3$, gegenüber dem Silikat-Anteil, berechnet als $SiO_2$ (jeweils bezogen auf das Pigment) im Unterschuss ist.

2. Verfahren nach Anspruch 1, dadurch gekennzeichnet, dass die Erhitzung bei 550° C durchgeführt wird.

3. Verfahren nach Anspruch 1 und/oder 2, dadurch gekennzeichnet, dass das Verhältnis von $Sb_2O_3$ zu $SiO_2$ innerhalb der Grenzen 1:2,3 bis 1:3 liegt.

4. Verfahren zur Herstellung nach Anspruch 1 bis 3, dadurch gekennzeichnet, dass das Verhältnis von $Sb_2O_3$ zu $SiO_2$ wie 1:2,6 liegt.

## Revendications

1. Procédé de préparation de pigments au chromate de plomb de teinte pure avec une résistance à la lumière améliorée par chauffage à des températures supérieures à 500° C, caractérisé en ce que les pigments sont stabilisés par des ions antimoine et silicate, la proportion de l'antimoine, calculé comme $Sb_2O_3$, dans le pigment étant inférieure à celle du silicate, calculé comme $SiO_2$.

2. Procédé suivant la revendication 1, caractérisé en ce que le chauffage est réalisé vers 550° C.

3. Procédé suivant la revendication 1 et(ou) la revendication 2, caractérisé en ce que le rapport $Sb_2O_3$-$SiO_2$ est compris entre 1:2,3 et 1:3.

4. Procédé de préparation suivant les revendications 1 à 3, caractérisé en ce que le rapport $Sb_2O_3$-$SiO_2$ est égal à 1:2,6.

## Claims

1. A process for the production of lead chromate pigments exhibiting improved lightfastness and a clean hue, by heating at temperatures above 500° C, wherein the pigments are stabilized with antimony and silicate ions, an excess of silicate, calculated as $SiO_2$, over antimony, calculated as $Sb_2O_3$ (based on the pigment in each case) being used.

2. A process as claimed in claim 1, wherein heating is carried out 550° C.

3. A process as claimed in claim 1 and/or 2, wherein the ratio of $Sb_2O_3$ to $SiO_2$ is from 1:2,3 to 1:3.

4. A production process as claimed in claims 1 to 3, wherein the ratio of $Sb_2O_3$ to $SiO_2$ is 1:2,6.